# EUROPEAN PATENT SPECIFICATION

(11) **EP 2 150 809 B1**
(45) Date of publication and mention of the grant of the patent: **15.05.2019**
(21) Application number: 08759970.0
(22) Date of filing: 23.05.2008
(51) Int. Cl.: G01N 30/60, B01L 3/00

(54) **DEVICE FOR THE DISTRIBUTION OF SAMPLE AND CARRIER LIQUID ACROSS A MICRO-FABRICATED SEPARATION CHANNEL**
VORRICHTUNG ZUR VERTEILUNG VON PROBE UND TRÄGERFLÜSSIGKEIT QUER ÜBER EINEN MIKROTECHNISCH HERGESTELLTEN TRENNKANAL
DISPOSITIF PERMETTANT DE DISTRIBUER UN ÉCHANTILLON ET UN LIQUIDE PORTEUR SUR LA LARGEUR D'UN CANAL DE SÉPARATION MICRO-FABRIQUÉ

(30) Priority: 23.05.2007 WO PCT/EP2007/055008
(43) Date of publication of application: 10.02.2010
(60) Divisional application: 19167776.4
(73) Proprietor: PharmaFluidics NV, 9052 Gent (BE)
(72) Inventor: DESMET, Gert, 1982 Elewijt (BE)
(74) Representative: Paemen, Liesbet R.J.
(86) International application number: PCT/EP2008/056369
(87) International publication number: WO 2008/142160

(56) References cited:
- EP-A- 0 977 030
- EP-A- 1 738 828
- US-A- 6 156 273
- US-A1- 2005 095 602
- US-A1- 2006 065 528
- US-A1- 2006 285 996
- EGHBALI HAMED, DE MALSCHE WIM, CLICQ DAVID , GARDENIERS HAN , DESMET GERT: "Pressure-driven Chromatography in Perfectly Ordered Pillar Array Columns" LC-GC EUROPE, [Online] 1 April 2007 (2007-04-01), pages 1-11, XP002496763 Retrieved from the Internet: URL:www.lcgceurope.com> [retrieved on 2008-09-11]
- DE PRA M; KOK W TH; GARDENIERS J G E; DESMET G; EELTINK S; VAN NIEUWKASTEELE J W; SCHOENMAKERS P J: "Experimental Study on Band Dispersion in Channels Structured with Micropillars" ANALYTICAL CHEMISTRY, vol. 78, no. 18, 15 September 2006 (2006-09-15), pages 6519-6525, XP002496764 AMERICAN CHEMICAL SOCIETY
- AJMERA S K ET AL: "Microfabricated cross-flow chemical reactor for catalyst testing" SENSORS AND ACTUATORS B, ELSEVIER SEQUOIA S.A., LAUSANNE, CH, vol. 82, no. 2-3, 28 February 2002 (2002-02-28), pages 297-306, XP004343663 ISSN: 0925-4005
- DE SMET J; GZIL P; VERVOORT N; VERELST H; BARON G V; DESMET G: "Influence of the Pillar Shape on the Band Broadening and the Separation Impedance of Perfectly Ordered 2-D Porous Chromatographic Media" ANALYTICAL CHEMISTRY, vol. 76, no. 13, 1 July 2004 (2004-07-01), pages 3716-3726, XP002496765 AMERICAN CHEMICAL SOCIETY

## Description

### Technical field

The present invention relates to the field of liquid chromatography. The invention provides a device and method for the distribution of sample and carrier liquid across a separation channel.

### Background

In the art of liquid chromatography, more and more devices are being developed that make use of microfabricated separation channels arranged on the surface of a polymer, silicon or glass wafer. Using etching techniques, said microfabricated separation channels usually have a flat-rectangular cross-section, i.e. are much wider than deep or are much deeper than wide.

To perform and detect a liquid chromatographic separation, said microfabricated separation channels are coupled to a sample injector and to a detector device. Traditionally, this coupling is ensured using a cylindrical connection capillary. The technological challenge surfacing here is that the liquid coming from a round tubing with limited diameter should be spread uniformly over the cross-section of said microfabricated separation channel without creating excessive band broadening or axial dispersion. Similarly, it is also important that at the end of the separation channel a distribution zone is arranged to make the transition between the flow in the flat-rectangular separation channel and the circular tubing needed to lead the sample towards an off-chip detector. If performing liquid chromatography, this transition should occur with a minimum of band broadening. One of the general engineering rules that can be used for the design of these flow distribution structures is that they should have a small total volume, for the band broadening or axial dispersion of a device is generally proportional to its volume.

With this in mind, a solution to disperse the liquid across a microchannel proposed in Sant el al. (2006, Reduction of End Effect-Induced Zone Broadening in Field-Flow Fractionation Channels, Anal. Chem., online publication A-H), and making use of a triangular distribution region with an opening angle between 60 and 90 degrees, has the clear drawback that it would occupy a too large volume if the ratio of separation channel width to inlet channel width is large. For example, if the separation channel would be 1 cm wide, the length of the distribution triangle in the case of 90 degree opening angle a would also have to be 1 cm. The continuously bifurcating channel inlet proposed in US patent N° 6,156,273 also makes use of such a diverging channel inlet or outlet.

There is a need in the art for providing a device for the distribution of sample and carrier liquid across a micro-fabricated separation channel, which overcomes at least some of the above-indicated drawbacks.

### Summary

The present invention provides a device for the distribution of sample and carrier liquid in a micro-fabricated separation channel, wherein dispersion or permeability of the sample and carrier liquid across said separation channel is improved. In particular, the invention provides a device in which flow distribution zones are designed, wherein the lateral dispersion or permeability is promoted so as to become larger than the axial dispersion or permeability. Given that the incoming liquid needs to be spread in the lateral direction across the channel cross-section, such design is much more advantageous. It is noted that the flow distribution structures proposed in US patent 6,156,273 and Sant et al. (2006) is that they have a lateral dispersion that is smaller than their axial dispersion.

Thereto, in all embodiments according to the present invention, a device is provided wherein flow distribution regions are developed that are filled, preferably over their entire depth, with an array of micro-fabricated pillars having a shape, size and positioning pattern selected such that said flow distribution region has a ratio of transversal to axial permeability of at least 2.

This permeability ratio can for example be calculated using computational fluid dynamics software to calculate the pressure drop of a flow progressing through the distribution region in the axial direction and comparing that with the pressure drop of a flow progressing through the distribution region in the transversal direction with the same mean velocity. The ratio of both pressure drops is then the inverse of the permeability ratio.

A mathematical definition of permeability is given in Eq. (7) of De Smet J. et al. :"Influence of the Pillar Shape on the Band Broadening and the Separation Impedance of Perfectly Ordered 2-D Porous Chromatographic Media" Analytical chemistry, 76(3), 2004.

Eghbali H. et al.: "Pressure-driven Chromatography in Perfectly Ordered Pillar Array Columns" LC-GC Europe, [Online] 1 April 2007 disclosed a chromatographic separation device according to the preamble of claim 1.

### Description of the drawings

**Figure 1a** is a top view of a separation channel being arranged with one of the flow distribution regions according the present invention.
**Figure 1b** illustrates examples of micro-pillar shapes with a suitable lateral width to axial width ratio.
**Figure 2** is a top view of one of the flow distribution regions according the present invention, consisting of pillars with a size and/or inter-pillar distance that varies in the lateral direction.
**Figure 3** is a longitudinal cross-sectional view of one of the flow distribution regions according the present invention, wherein at least one part of the flow distribution region is etched to a lesser depth than said separation channel.
**Figure 4** is a longitudinal cross-sectional view of a device according to the present invention wherein a flow distribution region is arranged on a surface different from the surface carrying the separation channel.
**Figure 5** is a longitudinal cross-sectional view of a device according to the present invention wherein two different flow distribution regions are connected to different inlet reservoirs.
**Figure 6a****-b** illustrate a top view of one of the flow distribution regions according to the present invention having parallel running separation walls and connected to different (Fig 6a) inlet or (Fig 6b) outlet channels.

### Detailed description of the invention

The present invention relates to a flow distribution region designed to spread a liquid uniformly across the lateral width of a flat-rectangular separation channel containing a separation medium. Said separation medium can be another micro-pillar array, a bead packing, a monolithic support or any other suitable chromatographic medium.

The terms "*distribution*" and "*dispersion*" are used herein in some embodiments as synonyms and refer to the spatial property of being scattered about over an area or volume.

The term "*permeability*" as used herein refers to the rate of flow of a liquid through a material, preferably across a micro-fabricated separation channel as defined herein.

In a first embodiment the invention provides a chromatographic separation device comprising a first substrate body carrying a micro-fabricated separation channel recessed on one of its surfaces and covered by a second substrate body, both perforated with the necessary connection-holes for the supply and withdrawal of the sample and mobile phase liquid, characterized therein that said micro-fabricated separation channel is preceded or succeeded by a flow distribution region that is filled from bottom to top with an array of micro-fabricated pillars having a shape, size and positioning pattern selected such that said flow distribution region has a ratio of transversal to axial permeability of at least 2. Preferably, the invention relates to a chromatographic separation device comprising a first substrate body carrying a micro-fabricated separation channel recessed on one of its surfaces and covered by a second substrate body, whereby said first and said second substrate body are both perforated with inlet and outlet connection-holes for the supply and withdrawal of a sample and carrier liquid, characterized in that said micro-fabricated separation channel is preceded or succeeded by a flow distribution region that is filled with an array of micro-fabricated pillars, whereby said pillars have a shape, size and positioning pattern selected such that said flow distribution region has a ratio of transversal to axial permeability of at least 2.

In a preferred embodiment, said flow distribution region has a substantially uniform lateral width, said width being equal to the width of said separation channel.

In another embodiment, a device is provided wherein said micro-fabricated pillars have a diamond-like or ellipsoidal shape. Preferably said micro-fabricated pillars have a ratio of lateral width to axial width that is larger than 3/2.

In a preferred embodiment, the invention relates to a device wherein said micro-fabricated pillars are arranged in different zones of different pillar sizes, whereby said different zones are arranged in a substantially monotonic order from the zone containing the smallest pillars to the zone containing the largest pillars, and whereby the zone containing the largest pillars is arranged closest to the inlet or outlet connection hole of said substrate body.

Even more preferred, a device is provided wherein said micro-fabricated pillar zone having the largest pillars is adjacent to an open zone devoid of pillars. Said open zone preferably has a width of 1 to 20 µm.

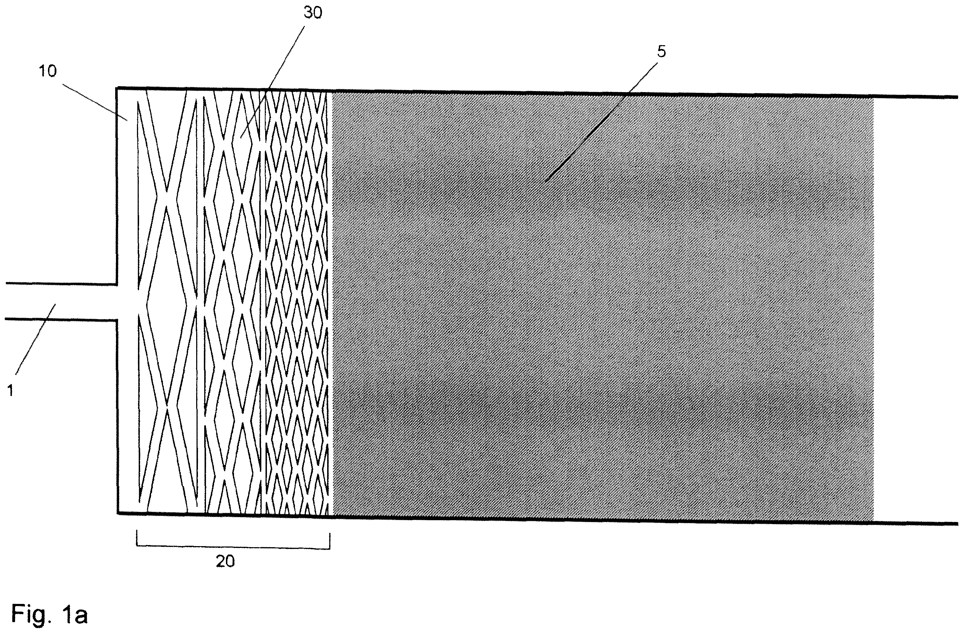

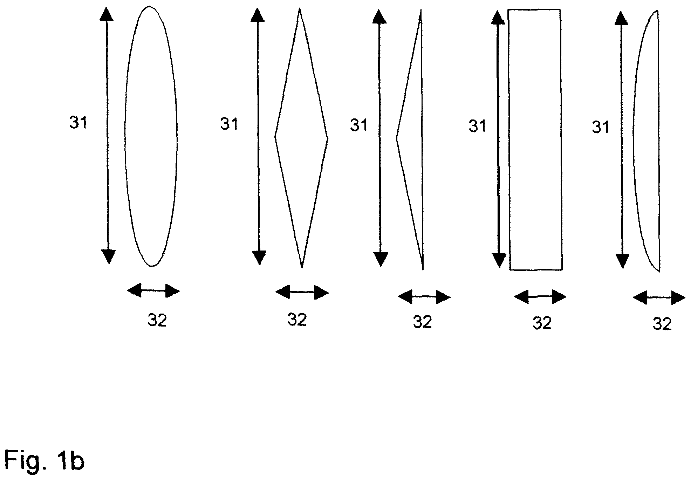

**Fig. 1a** shows an embodiment of a flow distribution region according the present invention and preceding a separation channel filled with a separation medium 5, comprising a short open region 10, constituting a flow domain wherein the resistance against the flow in the lateral direction is minimal, preferably 1 to 10 µm wide and being directly connected to the inlet orifice 1, followed by a flow distribution region 20 according to the present invention comprising micro-machined pillars 30 having a ratio of lateral width 31 to axial width 32 (**Fig. 1b**) that is larger than 3/2 and sufficiently closely packed to induce a lateral permeability that is at least 2 times larger than the axial permeability. In a preferred embodiment, said micro-machined pillars are arranged in order of decreasing size, with the largest pillars closest to the inlet orifice 1 of the substrate body carrying said separation channel. At the channel outlet, the different regions making up the flow distribution regions should be arranged in an opposite order, starting with the smallest flow distribution pillars and ending with the open region.

**Fig. 1b** shows a top view of a number of the possible micro-fabricated pillar shapes that can be effective for use in the flow distribution region(s) according to the present invention. The terms "micro-fabricated" or micro-machined are used herein as synonym. Methods to produce the desired micro-pillars are well-known to those skilled in the art of micromachining, and are for example Bosch etching or LIGA replication. Substrates suitable to produce the micro-pillars are for example glass wafers or silica wafer. The terms "micro-pillar" or "pillar" as used herein refer to structures that have been fabricated using a micromachining technique.

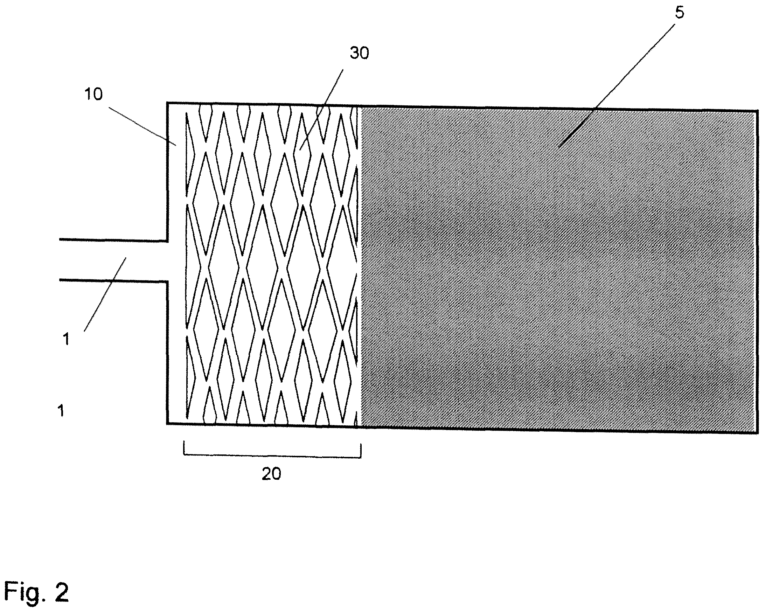

In another embodiment, the invention provides a device wherein the size and the inter-pillar distance of said micro-pillars is varied in lateral direction. To promote a further good lateral distribution of the liquid, it also one of the aspects of the present invention to provide a pattern of pillars with a size and/or inter-pillar distance that varies in the lateral direction so as to have a flow distribution region having a lower flow resistance in the lateral channel parts that are most remote of the inlet and/or outlet orifices. Such embodiment is for instance illustrated on **Fig. 2****.**

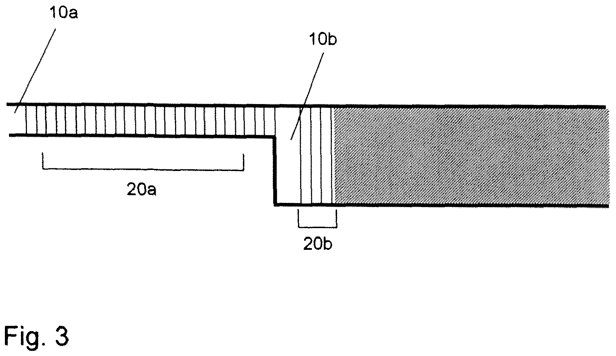

In yet another preferred embodiment, at least one part of the flow distribution region has a lesser depth than said separation channel, i.e. it is etched to a lesser depth than said separation channel. **Fig. 3** shows such an embodiment, wherein the open region 10a and a first part of the flow distribution region 20a is etched to a significantly lesser depth than the separation channel containing the separation medium 5 and the second part of the flow distribution region 20b, preferably also preceded by an open region 10b. The advantage of this embodiment is that a further reduction of the volume of the flow distribution region is created. In some embodiments according to the present invention, said deeper etched second part 20b can be omitted. In some case however, a particular advantage of deeper etched second part 20b of said flow distribution can be obtained by selecting the pillar sizes and inter-pillar dimensions such that the axial permeability of said second part is very low. This will help to induce a convective flow in the open region 10b that runs essentially in the downward direction, hence promoting the mixing across the depth of the separation channel.

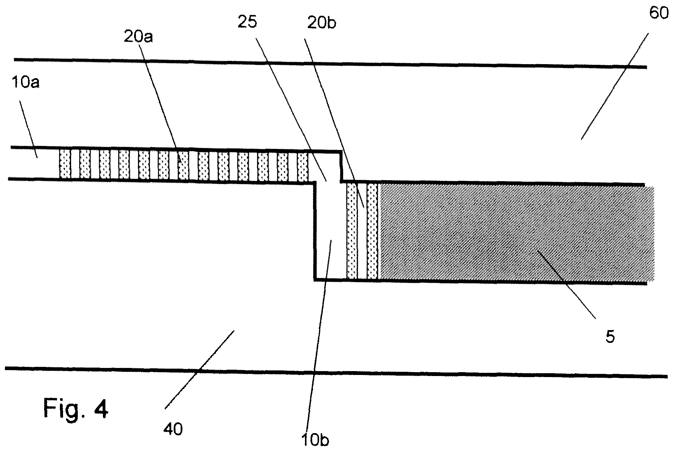

In another embodiment, the invention provides a device, wherein at least one part of the flow distribution region is arranged on a different surface than the surface carrying said separation channel. The present invention is not limited to flow distribution regions that are arranged on the same surface as the surface carrying said separation channel. As represented in **Fig. 4****,** the use of a perpendicularly etched connection channel 25 allows at least a part of the flow distribution region 20a to be arranged on either the surface of the substrate body 40 carrying the separation channel filled with the separation medium 5 (opposite to the surface carrying the separation channel), or on one of the surfaces of the substrate body 60 used to close off the separation channel. The advantage of these embodiments is that the perpendicular running connection channel 25 will induce a perpendicular flow to the separation channel, hence promoting mixing in the depth of the channel.

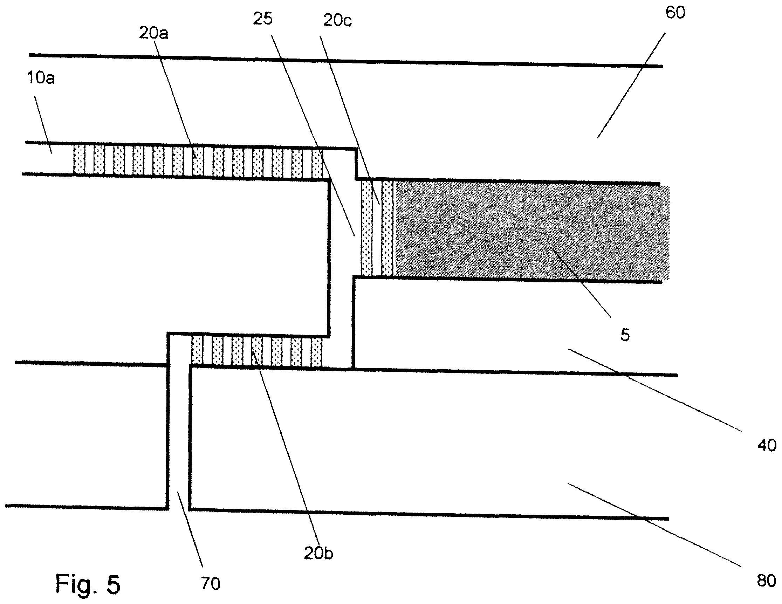

In another embodiment according to the present invention, a device may be provided wherein at least two different flow distribution regions are present at a different surface and are connected to a different liquid reservoir. Multiple inlet flows coming from different fluid reservoirs can be used. For example, as represented on **Fig. 5****,** one inlet flow is provided that feeds a first distribution region 20a, and a second inlet flow is provided that feeds a second distribution region 20b, and that enters the separation device via a second inlet orifice 70 machined in a third substrate 80 used to close off the second distribution region 20b (**Fig. 5**). The advantage of this embodiment is that the sample to be separated can be sent through a flow distribution region that is smaller -hence creating less band broadening- than the flow distribution region used for the main mobile phase flow or carrier fluid. Both separate inlet flows can be organized alternately or simultaneously.

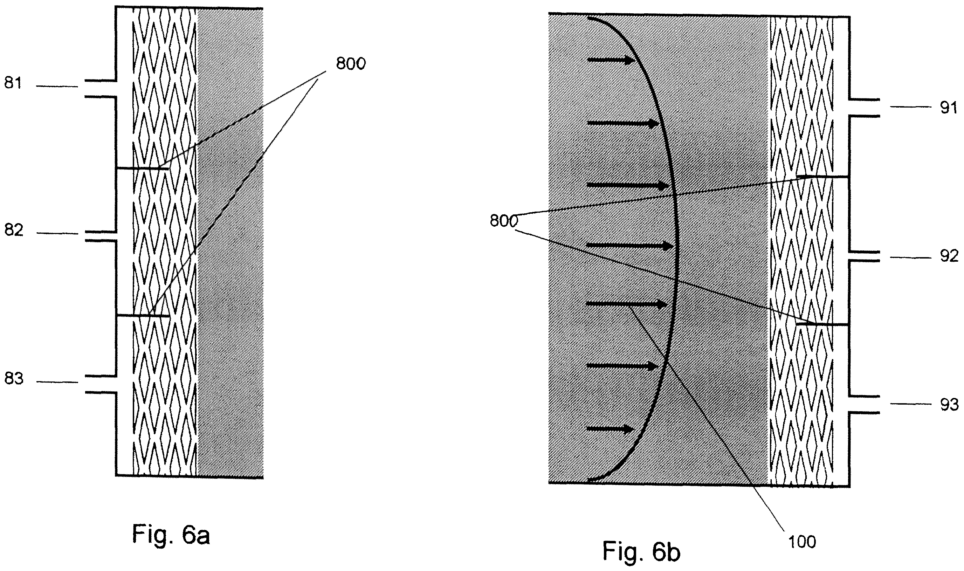

In yet another embodiment according to the present invention, a device is provided, wherein said flow distribution region is provided with one or more impermeable thin walls, which at least partly divide said flow distribution regions in two or more sections, said walls being provided parallel with the mean flow direction, and wherein preferably said sections are each connected to a different in- or outlet channel. For instance, the flow distribution region is at least partly divided using n impermeable thin walls 800, n being larger than 1, running parallel with the mean flow direction and hence preventing the communication between different lateral parts of the flow distribution region. **Fig. 6a** illustrates how this approach can be used to feed the sample to the central part of the channel only, using separate feeding channels 81, 82 and 83. **Fig. 6b** illustrates how this approach can be used to feed the liquid running through the central part of the channel exclusively to the detector device using a first outlet channel 92, while the liquid flowing closest to the channel side walls is evacuated to the waste using a second and a third outlet channel 91 and 93. Arranging said flow dividing impermeable walls into the flow distributor region is especially advantageous because the flow distributor will anyhow also limit the band broadening induced by the transition between the broad separation channel and the narrow in- and outlet channels and also because the high flow resistance of the distributor regions according to the present invention allows alleviating the influence of differences in flow resistance among the parallel inlet channels or among the parallel outlet channels by making the flow resistance of said parallel inlet and outlet channels negligible compared to the flow resistance of the flow distributor region.

Limiting the injection and detection of species to the central region of the channel can be expected to be very advantageous if the flow distributing device itself functions improperly and leads to a warped velocity profile 100. In this case it would be advantageous to only inject and/or detect in the central part of the channel, where the warp of the velocity profile will anyhow be much smaller than near the side-walls. It will also be very advantageous to circumvent the side-wall dispersion problem described in Broeckhoven and Desmet (Journal of Chromatography A, 1172 (2007), 25-39).

The present invention further relates to a method for controlling dispersion and/or permeability of a sample and carrier liquid across a micro-fabricated separation channel having inlet and outlet connection-holes for respectively the supply and the withdrawal of said sample and carrier liquid, said method comprising inducing a lateral permeability that is larger than an axial permeability. Preferably, said method comprises inducing a lateral permeability that is at least 2 times larger than said axial permeability. The present method is carried out by providing in the front of, or in the back of said micro-fabricated separation channel a flow distribution region that is filled with an array of micro-fabricated pillars. Said pillars have a shape, size and positioning pattern as defined herein and selected such that said flow distribution region provides a ratio of transversal to axial permeability of at least 2.

In another embodiment, the invention provides a method for controlling flow dispersion or permeability of a sample and carrier liquid across a micro-fabricated separation channel comprising inducing in the lateral parts of said separation channel that are most remote of said connection holes a lower flow resistance. This embodiment can be obtained by adapting shape, size, positioning pattern, and/or inter-pillar distance of said micro-pillars in the lateral direction of said micro-fabricated separation channel.

The invention further provides a method comprising separately controlling the permeability (dispersion) of said sample and said carrier liquid.

Top view CCD-camera images can be used for comparing the band broadening obtained with a flow distribution region according to the present invention and being composed of diamond pillars with a lateral width that is 10 times larger than the axial width and therefore having a ratio of transversal to axial dispersion larger than two with the band broadening obtained in a continuously bifurcating inlet system as for example disclosed in US patent N° 6,156,273. The band in the device according to the invention is clearly narrower and less distorted than the band in the prior art device. The distortions of the latter band are caused by the fact that any band distortion originating from a difference in flow resistance, caused by inevitable small etching errors, between the branches of a bifurcating channel system can not be corrected in the remainder of the inlet system since the different branches of the bifurcating inlet are not transversally interconnected. The flow distributors according to the present invention on the other hand are designed such that they promote lateral mixing and therefore allow the immediate correction, through lateral mixing, of small band distortions.

## Claims

1. A chromatographic separation device comprising a first substrate body carrying a micro-fabricated separation channel recessed on one of its surfaces and covered by a second substrate body, both perforated with the necessary connection-holes for the supply and withdrawal of a sample and mobile phase liquid, wherein said micro-fabricated separation channel is preceded or succeeded by a flow distribution region (20) that is filled with an array of micro-fabricated pillars, **characterized by** said pillars having a shape, size and positioning pattern selected such that said flow distribution region has a ratio of transversal to axial permeability of at least 2, whereby the incoming liquid is spread in the transversal direction across the channel cross-section.

2. A device according to claim 1, wherein said flow distribution region has a substantially uniform lateral width that is equal to the width of said separation channel.

3. A device according to claim 1 or 2, wherein said micro-fabricated pillars have a diamond-like or ellipsoidal shape.

4. A device according to any of claims 1-3, wherein said micro-fabricated pillars have a ratio of lateral width to axial width that is larger than 3/2.

5. A device according to any of claims 1-4, wherein said micro-fabricated pillars are arranged in different zones of different pillar sizes, whereby said different zones are arranged in a substantially monotonic order from the zone containing the smallest pillars to the zone containing the largest pillars, and whereby the zone containing the largest pillars is arranged closest to the inlet or outlet connection hole of said substrate body.

6. A device according to any of claim 5, wherein said micro-fabricated pillar zone having the largest pillars is adjacent to an open zone devoid of pillars.

7. A device according to claim 6, wherein said open zone has a width of 1 to 20 µm.

8. A device according to any of claims 1-7, wherein the size and the inter-pillar distance of said micro-pillars is varied in lateral direction.

9. A device according to any of claims 1-8, wherein at least one part of the flow distribution region has a lesser depth than said separation channel.

10. A device according to any of claims 1-9, wherein at least one part of the flow distribution region is arranged on a surface which is different from the surface carrying said separation channel.

11. A device according to any of claims 1-10, wherein at least two different flow distribution regions are provided on different surfaces and whereby said different flow distribution regions are connected to different liquid reservoirs.

12. A device according to any of claims 1-11, wherein said flow distribution region is provided with one or more impermeable thin walls, which at least partly divide said flow distribution region in two or more sections, said walls being provided parallel with the mean flow direction, and wherein said sections are each connected to a different in- or outlet channel.

## Patentansprüche

1. Chromatographische Trennvorrichtung, umfassend einen ersten Substratkörper, der einen mikrotechnisch hergestellten Trennkanal trägt, der auf einer seiner Oberflächen ausgespart ist und von einem zweiten Substratkörper abgedeckt wird, die beide mit den notwendigen Verbindungslöchern zum Zuführen und Entnehmen einer Probe und einer flüssigen mobilen Phase perforiert sind, wobei dem mikrotechnisch hergestellten Trennkanal eine Flussverteilungsregion (20), die mit einer Anordnung von mikrotechnisch hergestellten Säulen gefüllt ist, vorangeht oder nachfolgt, **dadurch gekennzeichnet, dass** die Säulen ein Form-, Größen- und Positionsmuster aufweisen, das so gewählt ist, dass die Flussverteilungsregion ein Verhältnis von transversaler zu axialer Permeabilität von mindestens 2 aufweist, wodurch die ankommende Flüssigkeit in Querrichtung über den Kanalquerschnitt verteilt wird.

2. Vorrichtung nach Anspruch 1, wobei die Flussverteilungsregion eine im Wesentlichen gleichmäßige seitliche Breite aufweist, die der Breite des Trennkanals gleicht.

3. Vorrichtung nach Anspruch 1 oder 2, wobei die mikrotechnisch hergestellten Säulen eine diamantförmige oder ellipsenförmige Gestalt aufweisen.

4. Vorrichtung nach einem der Ansprüche 1-3, wobei die mikrotechnisch hergestellten Säulen ein Verhältnis von seitlicher Breite zu axialer Breite von mehr als 3/2 aufweisen.

5. Vorrichtung nach einem der Ansprüche 1-4, wobei die mikrotechnisch hergestellten Säulen in verschiedenen Zonen mit unterschiedlichen Säulengrößen angeordnet sind, wobei die verschiedenen Zonen in einer im Wesentlichen monotonen Reihenfolge von der Zone, welche die kleinsten Säulen enthält, zu der Zone, welche die größten Säulen enthält, angeordnet sind, und wobei die Zone, welche die größten Säulen enthält, dem Einlass- oder Auslassverbindungsloch des Substratkörpers am nächsten angeordnet ist.

6. Vorrichtung nach einem von Anspruch 5, wobei die mikrotechnisch hergestellte Säulenzone mit den größten Säulen sich neben einer offenen Zone befindet, die frei von Säulen ist.

7. Vorrichtung nach Anspruch 6, wobei die offene Zone eine Breite von 1 bis 20 µm aufweist.

8. Vorrichtung nach einem der Ansprüche 1-7, wobei die Größe und der Abstand zwischen Säulen der Mikrosäulen in seitlicher Richtung variieren.

9. Vorrichtung nach einem der Ansprüche 1-8, wobei zumindest ein Teil der Flussverteilungsregion eine geringere Tiefe als der Trennkanal aufweist.

10. Vorrichtung nach einem der Ansprüche 1-9, wobei zumindest ein Teil der Flussverteilungsregion auf einer Oberfläche angeordnet ist, die sich von der den Trennkanal tragenden Oberfläche unterscheidet.

11. Vorrichtung nach einem der Ansprüche 1-10, wobei zumindest zwei verschiedene Flussverteilungsregionen auf unterschiedlichen Oberflächen vorgesehen sind und wobei die verschiedenen Flussverteilungsregionen mit verschiedenen Flüssigkeitsreservoirs verbunden sind.

12. Vorrichtung nach einem der Ansprüche 1-11, wobei die Flussverteilungsregion eine oder mehrere undurchlässige dünne Wände aufweist, welche die Flussverteilungsregion zumindest teilweise in zwei oder mehr Abschnitte unterteilen, wobei die Wände parallel zur mittleren Flussrichtung vorgesehen sind und wobei die Abschnitte jeweils mit einem anderen Einlass- oder Auslasskanal verbunden sind.

## Revendications

1. Dispositif de séparation chromatographique comprenant un premier corps de substrat portant un canal de séparation micro-fabriqué renfoncé sur l'une de ses surfaces et recouvert par un deuxième corps de substrat, tous deux étant perforés avec les trous de connexion nécessaires pour l'alimentation et le prélèvement d'un échantillon et d'un liquide à phase mobile, ledit canal de séparation micro-fabriqué étant précédé ou suivi d'une région de distribution d'écoulement (20) qui est remplie avec un ensemble de piliers micro-fabriqués, **caractérisé en ce que** lesdits piliers présentent une forme, une dimension et un motif de positionnement choisis de telle sorte que ladite région de distribution d'écoulement présente un rapport de perméabilité transversale à axiale d'au moins 2, le liquide entrant étant étalé dans la direction transversale en travers de la section transversale du canal.

2. Dispositif selon la revendication 1, dans lequel ladite région de distribution d'écoulement présente une largeur latérale sensiblement uniforme qui est égale à la largeur dudit canal de séparation.

3. Dispositif selon la revendication 1 ou 2, dans lequel lesdits piliers micro-fabriqués présentent une forme en losange ou ellipsoïde.

4. Dispositif selon l'une quelconque des revendications 1 à 3, dans lequel lesdits piliers micro-fabriqués présentent un rapport de la largeur latérale à la largeur axiale qui est supérieur à 3/2.

5. Dispositif selon l'une quelconque des revendications 1 à 4, dans lequel lesdits piliers micro-fabriqués sont disposés dans des zones différentes de dimensions de piliers différentes, lesdites zones différentes étant disposées dans un ordre sensiblement monotone depuis la zone contenant les plus petits piliers jusqu'à la zone contenant les plus grands piliers, et la zone contenant les plus grands piliers étant en l'occurrence disposée plus près du trou de connexion d'entrée ou de sortie dudit corps de substrat.

6. Dispositif selon la revendication 5, dans lequel ladite zone de piliers micro-fabriqués présentant les plus grands piliers est adjacente à une zone ouverte sans piliers.

7. Dispositif selon la revendication 6, dans lequel ladite zone ouverte a une largeur de 1 à 20 µm.

8. Dispositif selon l'une quelconque des revendications 1 à 7, dans lequel la taille et la distance entre les piliers desdits micro-piliers varie dans la direction latérale.

9. Dispositif selon l'une quelconque des revendications 1 à 8, dans lequel au moins une partie de la région de distribution d'écoulement présente une profondeur inférieure audit canal de séparation.

10. Dispositif selon l'une quelconque des revendications 1 à 9, dans lequel au moins une partie de la région de distribution d'écoulement est disposée sur une surface qui est différente de la surface portant ledit canal de séparation.

11. Dispositif selon l'une quelconque des revendications 1 à 10, dans lequel au moins deux régions de distribution d'écoulement différentes sont prévues sur des surfaces différentes et lesdites régions de distribution d'écoulement différentes sont en l'occurrence connectées à des réservoirs de liquide différents.

12. Dispositif selon l'une quelconque des revendications 1 à 11, dans lequel ladite région de distribution d'écoulement est pourvue d'une ou de plusieurs parois minces imperméables qui divisent au moins en partie ladite région de distribution d'écoulement en deux ou plus de deux sections, lesdites parois étant prévues parallèlement à la direction d'écoulement moyenne, et lesdites sections étant chacune connectées à un canal d'entrée ou de sortie différent.
